Europäisches Patentamt

European Patent Office

Office européen des brevets

(19)

(11) Numéro de publication: **0 194 188**
**B1**

(12) # FASCICULE DE BREVET EUROPÉEN

(45) Date de publication du fascicule du brevet:
**14.12.88**

(21) Numéro de dépôt: **86400351.2**

(22) Date de dépôt: **19.02.86**

(51) Int. Cl.⁴: **G 01 L 9/02,** G 01 L 7/08,
G 01 L 19/04

(54) Capteur de pression à membrane comportant des moyens de compensation en température.

(30) Priorité: **22.02.85 FR 8502566**

(43) Date de publication de la demande:
**10.09.86 Bulletin 86/37**

(45) Mention de la délivrance du brevet:
**14.12.88 Bulletin 88/50**

(84) Etats contractants désignés:
**DE FR GB IT**

(56) Documents cité:
**FR-A-683 802**
**GB-A-997 200**
**US-A-2 502 559**
**US-A-4 206 437**

(73) Titulaire: **JAEGER, 2, rue Baudin, F-92303 Levallois-Perret (FR)**

(72) Inventeur: **Dombrovski, Daniel, 58, rue Sartoris,
F-92250 La Garenne Colombes (FR)**
Inventeur: **Dumoulin, Georges, 4, Résidence les
Clématites, F-92600 Asnières (FR)**
Inventeur: **Unterhalt- Roussel, Claude, 51, rue de
Pommeil, F-23000 Gueret (FR)**

(74) Mandataire: **Martin, Jean- Jacques, Cabinet
REGIMBEAU 26, Avenue Kléber, F-75116 Paris (FR)**

LIBER, STOCKHOLM 1988

## Description

La présente invention concerne les capteurs de pression à membrane.

La présente invention concerne plus précisément les capteurs de pression à membrane du type comprenant un corps qui définit une chambre de pression communiquant avec un fluide dont on souhaite contrôler la pression, et qui est délimitée d'un côté par une membrane déformable, et un équipage mobile sollicité par la membrane à l'opposé de la chambre de pression et sensible aux déplacements de la membrane.

De tels capteurs de pression sont par exemple décrits dans les brevets US-A-2 777 028, 2 794 879, 3 121 145, 3 553 402 et 3 718 790.

Plus précisément encore, la présente invention concerne un capteur de pression à membrane comportant un capot obturé de façon étanche par la membrane et enveloppant l'équipage mobile (US-A-2 502 559).

Ce capot, de préférence serti sur le corps du capteur, a pour but d'assurer une protection étanche de l'ensemble.

Néanmoins, ces capteurs de pression à capot étanche sont amenés à travailler à des températures très variables, notamment lors d'utilisation sur véhicules automobiles.

Il résulte des variations de température que la pression sous le capot varie dans le même sens et ainsi modifie la position de repos de la membrane.

Par ailleurs, les dilatations thermiques des moyens support intervenant dans le positionnement de l'équipage mobile modifient également la position de repos de cet équipage.

La précision des capteurs de pression à membrane munis d'un capot protecteur laisse de ce fait à désirer.

On a tenté de remédier à ces inconvénients d'une part en assurant une communication étanche aux liquides mais perméable aux gaz entre le volume interne du capot et le milieu environnant afin de réguler la pression sous le capot, d'autre part en incorporant à l'équipage mobile des systèmes à bilame aptes à compenser les dilatations différentielles.

De tels systèmes sont cependant fort complexes, coûteux et peu fiables.

Par ailleurs, ces systèmes ne permettent pas de compenser avec précision les effets conjugués des variations de pression sous le capot protecteur et des dilatations différentielles.

La présente invention vient améliorer la situation en proposant un capteur de pression à membrane du type comprenant un corps qui définit une chambre de pression communiquant avec un fluide dont on souhaite contrôler la pression et qui est délimitée d'un côté par une membrane déformable, un équipage mobile sollicité par la membrane, à l'opposé de la chambre et sensible aux déplacements de la membrane, et un capot obturé de façon étanche par la membrane et enveloppant l'équipage mobile, caractérisé par le fait qu'il comprend, entre la membrane et l'équipage mobile, un organe de compensation en température dont la longueur λ considérée dans la direction de transmission de mouvement est déterminée par la relation:

$$\lambda = \frac{\left(\frac{\Delta 1M}{293.\Delta PM}\right) + (\Sigma\, \alpha n\, ln)}{\alpha\lambda}$$

dans laquelle

ΔPM    représente la variation maximale de pression du fluide, à détecter,

Δ1M    représente le déplacement de la membrane induit par la variation maximale de pression ΔPM,

αλ    représente le coefficient de dilatation en température de l'organe de compensation, et

Σ αn ln    représente la somme des produits des coefficients de dilatation thermique αn et des longueurs ln des éléments intervenant dans le positionnement de l'équipage mobile par rapport au corps du capteur.

La détermination de cette relation sera explicitée par la suite. Oon notera cependant dès à présent que cette relation s'appuie sur la constatation établie par la Demanderesse, selon laquelle la course de la membrane est linéaire en fonction de la pression et donc la position de repos de la membrane pour une pression à mesurer donnée, varie linéairement en fonction de la température.

Ainsi, selon l'invention, les influences des variations de température sur le positionnement de l'équipage mobile sont compensées avec précision tant en ce qui concerne les variations de pression sous le capot que les dilatations différentielles.

On notera par ailleurs que l'invention permet d'éliminer toute communication perméable aux gaz entre le volume interne au capot et le milieu environnant. Ceci renforce notablement la protection du capteur et donc sa fiabilité, sa précision et sa durée de vie.

De façon avantageuse, selon l'invention, la membrane est disposée entre une partie évasée du corps de capteur et une plaque de suppression et fixée sur celles-ci par soudure, de préférence par soudure à la molette.

Selon une caractéristique avantageuse de l'invention, l'organe de compensation comprend un matériau présentant un coefficient de dilatation thermique supérieure à 20.10$^{-6}$/°C et de préférence de l'ordre de 90.10$^{-6}$/°C.

L'organe de compensation est de préférence réalisé en poly-ethersulfone (PES).

Selon une autre caractéristique avantageuse de l'invention, l'organe de compensation est logé dans un manchon guidé à coulissement transversalement à la membrane.

Selon un mode de réalisation conforme à la présente invention, l'équipage mobile est monté pivotant sur le corps du capteur et le manchon précité supporte une plaque d'appui sur laquelle repose l'équipage mobile par l'intermédiaire d'une bille.

Dans un mode de réalisation considéré actuellement comme préférentiel, la plaque d'appui est réalisée en rubis, la bille est en tungstène et le manchon est en acier.

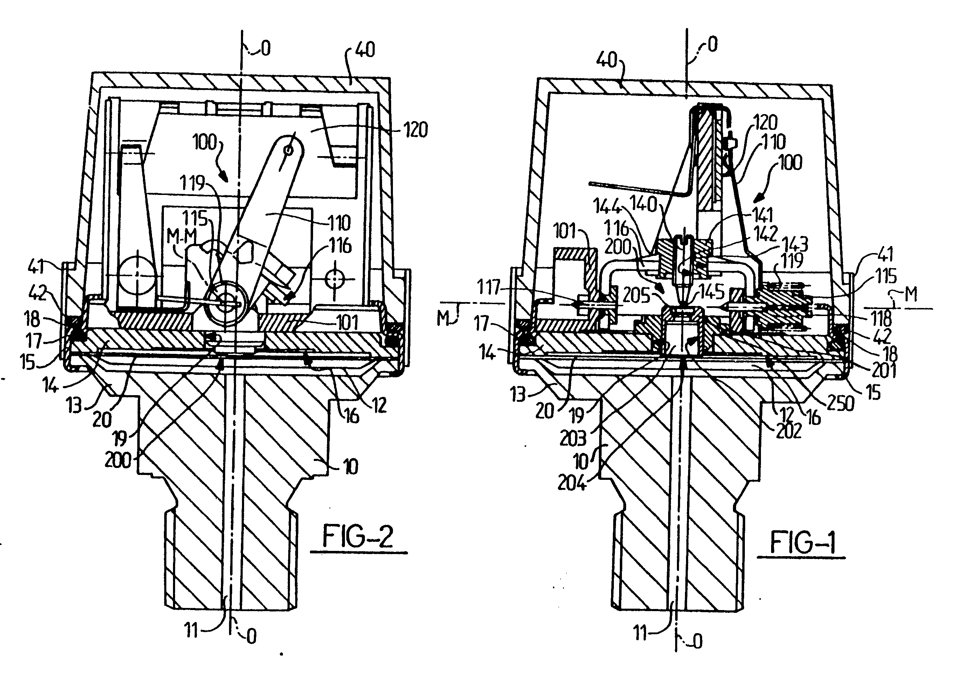

D'autres caractéristiques et avantages de la présente invention apparaîtront à la lecture de la description détaillée qui va suivre, et en regard des dessins annexés, donnés à titre d'exemple non limitatif et sur lesquels les figures 1 et 2 représentent deux vues en coupe axiale selon des plans respectivement orthogonaux d'un capteur de pression conforme à un mode de réalisation préférentiel de la présente invention.

Le capteur de pression représenté sur les figures annexées comprend d'une façon générale, un corps 10, une membrane 20, un capot 40, un équipage mobile 100 et des moyens de compensation 200.

L'axe du capteur est référencé O - O.

Le corps 10 est muni d'un orifice axial 11, en communication avec le fluide dont on souhaite mesurer la pression. L'orifice 11 débouche dans une chambre 12 définie entre la membrane déformable 20 et une partie évasée 13 du corps 10.

Une plaque de surpression 14 (limitant les déformations de la membrane 20 en éloignement du corps 10 en cas de surpression du fluide) est immobilisée par une douille 15 à l'opposé du corps 10 par rapport à la membrane. La surface 16 de la plaque de surpression 14 dirigée vers la membrane est étagée, comme représentée sur les figures pour présenter en regard de la membrane 20 un évidement, de profondeur croissante en direction de son centre, autorisant les déformations de la membrane en éloignement du corps 10.

La périphérie de la membrane 20 est fixée sur la partie évasée 13 du corps 10 et la plaque de surpression 14, entre celles-ci, de préférence par soudure à la molette comme cela sera précisé par la suite. Selon la représentation donnée sur les figures, un joint 17 est disposé entre la plaque de surpression 20 et un pli 18 de la douille 15 orienté radialement en regard de l'axe O - O du capteur.

On remarquera que la plaque de surpression 14 est munie d'un alésage central 19 dans lequel est guidé à coulissement l'organe de compensation 200.

Le capot 40 qui loge l'équipage mobile 100 est scellé de façon étanche sur la douille 15 par un manchon 41 ou équivalent avec interposition d'un joint d'étanchéité 42.

L'équipage mobile peut comprendre de simples contacts électriques déplacés par les déformations de la membrane 20 et disposés en regard de contacts fixes associés supportés par la douille 15 et permettant la détection du franchissement de seuils de pressions par le fluide. De tels capteurs seront directement inspirés des dispositifs décrits et représentés dans les brevets US-2 777 028, 2 794 879, 3 121 145; 3 553 402 et 3 718 790 précités.

De préférence cependant, comme cela est représenté sur les figures annexées, l'équipage mobile 100 est monté pivotant à l'intérieur du capot 40 et possède un curseur 110 déplacé sur une piste résistive 120 en fonction des déformations de la membrane 20.

L'équipage mobile est monté à pivotement sur une console 101 supportée par la douille 15.

Cette même console 101 est munie de la piste résistive 120.

Le curseur 110 est fixé sur un cylindre 115 lui-même solidaire d'un étrier 116 monté à rotation sur la console 101 grâce à deux tourillons coaxiaux 117, 118 s'étendant transversalement à l'axe O - O.

Un ressort hélicoïdal 119 engagé sur le cylindre 115 et dont les extrémités sont en prise respectivement avec l'étrier 116 et la console 101 assure le rappel de l'équipage mobile vers une position de repos dans laquelle l'âme de l'étrier 116 vient en appui contre la console 101 et le curseur 110 est placé à une extrémité de la piste résistive 120. Ce ressort 19 pourra néanmoins être remplacé par tout moyen équivalent, tel que par exemple un ressort de traction disposé entre le bras du curseur 100 et la console 101.

On remarquera que l'axe M-M de rotation de l'équipage mobile 100, matérialisé par l'axe des tourillons 117, 118 n'est pas sécant de l'axe O - O du capteur (tout en étant transversal à celui-ci).

L'organe de compensation 200 est intercalé entre la membrane 20 et l'étrier 116 ou un élément solidaire de celui-ci.

Selon la représentation donnée sur les figures, l'organe de compensation 200 est intercalé entre la membrane 20 et une vis de réglage 140.

De façon classique en soi, l'axe M - M n'étant pas sécant de l'axe O - O, les déformations de la membrane 20 induites par des variations de pression du fluide, et transmises à l'équipage mobile par l'organe de compensation 200 et la vis 140, provoquent un pivotement de l'étrier 116 autour de l'axe M - M matérialisé par les tourillons 117 et 118, et en parallèle un déplacement du curseur 110 sur la piste résistive 120.

La vis de réglage 140 est engagée selon la réalisation illustrée sur les figures annexées dans l'alésage taraudé 142 d'un insert 141. Ce dernier est inséré dans un alésage central 143 de l'étrier 116 et immobilisé en translation par rapport à celui-ci grâce à une rondelle élastique 144.

On va maintenant décrire la structure des moyens de compensation 200.

Ceux-ci comprennent un manchon cylindrique 201, réalisé de préférence en acier, qui possède une chambre cylindrique 202 ouverte vers la membrane 20 et qui loge un bloc cylindrique 203 formant organe de compensation. La longueur λ de cet organe 203 est supérieure à la profondeur de la chambre 202 de telle sorte que le bloc 203 repose contre la membrane 20 par sa face extrême discale 204.

Le diamètre interne de la chambre 202 est de préférence légèrement supérieur au diamètre du bloc 203 pour autoriser une libre dilatation transversale de ce dernier.

Le manchon 201 supporte par ailleurs, à l'opposé du bloc 203 une plaque d'appui 205 transversale à l'axe O - O sur laquelle repose une bille 145 supportée à l'extrémité adjacente de la vis de réglage 140.

Le manchon 201 remplit ainsi une triple fonction il assure la liaison de l'organe de compensation 203 et de la plaque d'appui 205, il assure le guidage à coulissement de l'organe de compensation 203, et la tenue à l'abrasion.

La bille 145 permet de limiter les frictions entre l'étrier 116 et les moyens de compensation 200 quelle que soit la position de cet étrier.

Le manchon 201 est disposé dans un guide 250 inséré dans l'alésage central 19 de la plaque de surpression 14.

Le manchon 201 est ainsi guidé à coulissement coaxialement à l'axe O - O sous l'effet des déformations de la membrane 20 dues aux variations de pression du fluide.

On remarquera également que le bloc 203 formant organe de compensation et la plaque d'appui 205 sont coaxiaux à l'axe O - O du capteur.

De préférence le manchon 201 est en acier, la plaque d'appui 205 est en rubis et la bille 145 est en tungstène.

Ainsi, la coopération - plaque d'appui 205 et bille 145 - permet à la fois de limiter les frictions du système et d'assurer l'isolation électrique du curseur par rapport au corps du capteur.

On va maintenant explicité la définition précédemment évoquée de la longueur $\lambda$ du bloc 203 de compensation.

Cet organe de compensation 203 doit d'une part compenser les déplacements de la membrane 20 liés aux variations de pression sous le capot protecteur 40, d'autre part compenser les dilatations différentielles des éléments intervenant dans le positionnement du curseur 110 par rapport à la piste résistive 120.

L'équation d'état des gaz parfaits donne:

(1)     $PV = kT$

soit à volume constant:

(2)     $\Delta P = \delta \Delta T$ avec $\delta = \frac{1}{293}$

La course de la membrane 20 étant linéaire en fonction de la pression, le déplacement $\Delta l1$ de la membrane 20 dû aux variations de pression sous le capot 40 est égal à:

(3)     $\Delta l1 = x \, \Delta P = x \, \delta \, \Delta T = \frac{x}{293} \Delta T$

avec

(4)     $\Delta IM = x \, \Delta PM$

relation dans laquelle
$\Delta PM$ représente la variation maximale de pression de fluide et
$\Delta IM$ représente le déplacement de la membrane 20 induit par la variation maximale de pression $\Delta PM$.

En combinant les relations (3) et (4) on obtient:

(5)     $\Delta l1 = \frac{\Delta IM}{\Delta PM} \cdot \frac{1}{293} \Delta T.$

Par ailleurs, les dilatations différentielles des éléments intervenant dans le positionnement du curseur 110 par rapport à la piste résistive 120, ramenées au niveau de la membrane 20 correspondent à un déplacement relatif de l'équipage mobile 100 et de la membrane 20 égale à

(6)     $\Delta l_2 = (\Sigma \, \alpha n \, ln) \, \Delta T$

relation dans laquelle $\alpha n$ représente le coefficient de dilatation thermique respectif des éléments intervenant dans le positionnement du curseur 110 par rapport à la piste résistive et ln représente la longueur respective des éléments intervenant dans le positionnement du curseur, considérée dans la direction de transmission de mouvement.

Chacun des termes $\alpha n \, ln$ est assorti d'un signe positif quand la dilatation de l'élément correspondant agit dans le même sens qu'une augmentation de pression sous le capot 40, et un signe négatif dans le cas contraire.

Pour compenser parfaitement les déplacements de la membrane 20 dus aux variations de pression sous le capot 40 ainsi que les dilatations différentielles, l'organe de compensation doit posséder une longueur, considérée dans la direction de transmission du mouvement, telle que

(7)     $\lambda \, \alpha\lambda \, \Delta T = \Delta l1 + \Delta l2$

relation dans laquelle $\alpha\lambda$ représente le coefficient de dilatation en température de l'organe de compensation 203, soit

(8)     $\lambda \, \alpha\lambda \, \Delta T = \frac{\Delta IM}{\Delta PM} \cdot \frac{1}{293} \Delta T + \Sigma \, \alpha n \, ln \, \Delta T$

et donc

(9)     $\lambda = \dfrac{\frac{\Delta IM}{\Delta PM} \cdot \frac{1}{293} + \Sigma \, \alpha n \, ln}{\alpha\lambda}$

Selon le mode de réalisation précédemment décrit et représenté sur les figures, les éléments intervenant dans le positionnement du curseur 110 et devant être pris en compte pour l'évaluation du terme ($\Sigma \, \alpha n \, ln$) sont les suivants: manchon 201, plaque de surpression 14, vis de réglage 140, guide 141, étrier 116, console 101.

Des calculs établis par la Demanderesse sur des structures de capteurs à membrane classiques ont conduit à des produits $\lambda\alpha\lambda$ de l'ordre de 31.10$^{-6}$ m ce qui compte tenu de la glace disponible dans ces capteurs nécessitent l'emploi de matériau 203 possédant un coefficient de dilatation thermique $\alpha\lambda$ supérieur à 20.10$^{-6}$/° C et de préférence de l'ordre de 90.10$^{-6}$/° C.

Ainsi, de façon préférentielle, selon l'invention, le matériau 203 est du poly-ethersulfone ($\alpha\lambda = 99 \times 10^{-6}$/° C) et sa longueur $\lambda$ est de l'ordre de 3,15 mm.

Bien entendu, la présente invention n'est pas limitée au mode de réalisation particulier qui vient d'être décrit mais s'étend à toutes variantes conformes à son esprit.

Comme cela a été précédemment évoqué, la périphérie de la membrane 20 est disposée entre la partie évasée 13 du corps 10 et la plaque de surpression 14 et fixée sur celles-ci.

La fixation de la membrane 20 sur la partie évasée 13 et la plaque 14 est réalisée par soudure après nettoyage approprié de ces éléments. Cette soudure peut être une soudure plasma, mais on lui préfère une soudure électrique, et en particulier une soudure à la molette.

On obtient, grâce à une telle fixation par soudure de la membrane 20 sur la partie évasée 13 et la plaque 14, une structure rigide, bien entendu étanche et exempte d'hystérésis.

De façon avantageuse, la membrane 20 est choisie dans la gamme des aciers spéciaux Fe + Ni + additifs, tels que l'acier commercialisé sous la dénomination "Durinvel C".

Par ailleurs, la partie évasée 13 du corps 11 et la plaque de surpression 14 sont de préférence réalisées en acier inoxydable et présentent au niveau de la soudure une épaisseur identique.

Il est impératif que la membrane 20, la partie évasée 13 et la plaque 14 possèdent des coefficients de dilatation thermique aussi proches que possible.

**Revendications**

1. Capteur de pression à membrane du type comprenant un corps (10) qui définit une chambre de pression (12) communiquant avec un fluide dont on souhaite contrôler la pression et qui est délimitée d'un côté par une membrane déformable (20), un équipage mobile (100) sollicité par la membrane (20), à l'opposé de la chambre (12) et sensible aux déplacements de la membrane, et un capot (40) obturé de façon étanche par la membrane et enveloppant l'équipage mobile, caractérisé par le fait qu'il comprend, entre la membrane (20) et l'équipage mobile (100), un organe (203) de compensation en température dont la longueur $\lambda$ considérée dans la direction de transmission de mouvement est déterminée par la relation:

$$\lambda = \frac{\left(\frac{\Delta IM}{293.\Delta PM}\right) + (\Sigma\ \alpha n\ ln)}{\alpha\lambda}$$

dans laquelle

$\Delta PM$ représente la variation maximale de pression du fluide,

$\Delta IM$ représente le déplacement de la membrane (20) induit par la variation maximale de pression $\Delta PM$

$\alpha\lambda$ représente le coefficient de dilatation en température de l'organe de compensation (203), et

$\Sigma\ \alpha n\ ln$ représente la somme des produits des coefficients de dilatation thermique an et des longueurs ln des éléments (201, 14, 140, 141, 116, 101), intervenant dans le positionnement de l'équipage mobile par rapport aux corps du capteur.

2. Capteur de pression à membrane selon la revendication 1, comprenant une plaque de surpression (14) pour limiter les déformations de la membrane en éloignement de la chambre de pression (12), caractérisé par le fait que la périphérie de la membrane (20) disposée entre le corps (10) et la plaque de surpression (14) est fixée sur celles-ci par soudure, de préférence par soudure à la molette.

3. Capteur de pression selon l'une des revendications 1 et 2, caractérisé par le fait que la membrane (20) est choisie dans la gamme des aciers spéciaux Fe + Ni, tandis que le corps (10) du capteur et la plaque de surpression (14) sont en acier inoxydable.

4. Capteur de pression selon l'une des revendications 1 à 3, caractérisé par le fait que l'organe de compensation (203) comprend un matériau présentant un coefficient de dilatation thermique supérieur à 20.10$^{-6}$/° C et de préférence de l'ordre de 90.10$^{-6}$/° C.

5. Capteur de pression selon l'une des revendications 1 à 4, caractérisé par le fait que l'organe de compensation (203) comprend du polyéthersulfone (PES).

6. Capteur de pression selon l'une des revendications 1 à 5, caractérisé par le fait que l'organe de compensation (203) est logé dans un manchon (201) guidé à coulissement transversalement à la membrane (20).

7. Capteur de pression selon la revendication 6 dans lequel l'équipage mobile (100) est monté pivotant sur le corps (10) du capteur, caractérisé par le fait que le manchon (201) supporte une plaque d'appui (205) sur laquelle repose l'équipage mobile (100) par l'intermédiaire d'une bille (145).

8. Capteur de pression selon la revendication 7, caractérisé par le fait que la plaque d'appui (205) est en rubis.

9. Capteur de pression selon l'une des revendications 7 ou 8, caractérisé par le fait que la bille (145) est en tungstène.

10. Capteur de pression selon l'une des revendications 6 à 9, caractérisé par le fait que le manchon (201) est en acier.

## Claims

1. Pressure-responsive device using a diaphragm of the type comprising a body (10) which defines a pressure chamber (12) communicating with a fluid of which one wishes to control the pressure and which is defined on one side by a deformable diaphragm (20), a movable arrangement (100) acted upon by the diaphragm (20), opposite the chamber (12) and sensitive to the movements of the diaphragm and a cover (40) closed off in a sealed manner by the diaphragm and surrounding the movable arrangement, characterised by the fact that it comprises, between the diaphragm (20) and the movable arrangement (100), a temperature-compensating member (203) whereof the length $\lambda$ considered in the direction of transmission of movement is determined by the relationship:

$$\lambda = \frac{\frac{\Delta IM}{293.\Delta PM} + \Sigma \alpha n \, ln}{\alpha \lambda}$$

in which

$\Delta PM$   represents the maximum pressure variation of the fluid,

$\Delta IM$   represents the movement of the diaphragm (20) induced by the maximum pressure variation $\Delta PM$

$\alpha \lambda$   represents the coefficient of expansion under the influence of temperature of the compensation member (203), and

$\Sigma \alpha n \, ln$   represents the sum of the products of the coefficients of thermal expansion $\alpha n$ and of the lengths ln of the members (201, 14, 140, 141, 116, 101), occurring in the positioning of the movable arrangement with respect to the body of the responsive device.

2. Pressure-responsive device using a diaphragm according to Claim 1, comprising an excess pressure plate (14) for limiting deformations of the diaphragm moving away from the pressure chamber (12), characterised by the fact that the periphery of the diaphragm (20) located between the body (10) and the excess pressure plate (14) is fixed to the latter, by welding, preferably by knurled welding.

3. Pressure-responsive device according to one of Claims 1 and 2, characterised by the fact that the diaphragm (20) is chosen from the range of special steels Fe + Ni, whereas the body (10) of the responsive device and the excess pressure plate (14) are made of stainless steel.

4. Pressure-responsive device according to one of Claims 1 to 3, characterised by the fact that the compensation member (203) comprises a material having a coefficient of thermal expansion greater than $20.10^{-6}/^\circ C$ and preferably of the order of $90.10^{-6}/^\circ C$.

5. Pressure-responsive device according to one of Claims 1 to 4, characterised by the fact that the compensation member (203) comprises polyethersulfone (PES).

6. Pressure-responsive device according to one of Claims 1 to 5, characterised by the fact that the compensation member (203) is housed in a sleeve (201) guided to slide transversely with respect to the diaphragm (20).

7. Pressure-responsive device according to Claim 6, in which the movable arrangement (100) is mounted to pivot on the body (10) of the responsive device, characterised by the fact that the sleeve (201) supports a support plate (205) on which the movable arrangement (100) rests through the intermediary of a ball (145).

8. Pressure-responsive device according to Claim 7, characterised by the fact that the support plate (205) is made of ruby.

9. Pressure-responsive device according to one of Claims 7 or 8, characterised by the fact that the ball (145) is made of tungsten.

10. Pressure-responsive device according to one of Claims 6 to 9, characterised by the fact that the sleeve (201) is made of steel.

## Patentansprüche

1. Druckaufnehmer mit Membrane, enthaltend einen Körper (10), der eine Druckkammer (12) ausbildet, die mit einem Fluid in Verbindung steht, dessen Druck überwacht werden soll, und die auf einer Seite von einer verformbaren Membran (20) begrenzt ist, eine bewegliche Einrichtung (100), die von der Membran (20) beaufschlagt ist, auf der der Kammer (12) abgewandten Seite und auf Verstellungen der Membran empfindlich, und eine Haube (40), die von der Membran dicht abgeschlossen ist und die bewegliche Einrichtung umgibt, dadurch gekennzeichnet, daß zwischen der Membran (20) und der beweglichen Einrichtung (100) ein Temperaturkompensationsorgan (203) angeordnet ist, dessen Länge $\lambda$, in Richtung der Bewegungsübertragung betrachtet, durch die Beziehung bestimmt ist:

$$\lambda = \frac{\frac{\Delta IM}{293.\Delta PM} + \Sigma \alpha n \, ln}{\alpha \lambda}$$

wobei

$\Delta PM$   die maximale Druckvariation des Fluides darstellt,

$\Delta IM$   die Verstellung der Membran (20) darstellt, die durch die maximale Druckvariation $\Delta PM$ hervorgerufen wird,

$\alpha \lambda$   den Temperaturausdehnungskoeffizienten des Kompensationsorgans (203) darstellt, und

$\Sigma \alpha n \, ln$   die Summe der Produkte aus den

Temperaturausdehnungskoeffizienten αn und den Längen In der Elemente (201, 14, 140, 141, 116, 101) darstellt, die bei der Einstellung der beweglichen Einrichtung gegenüber dem Körper des Aufnehmers teilnehmen.

2. Druckaufnehmer mit Membran nach Anspruch 1, enthaltend eine Überdruckplatte (14), um die Verformungen der Membran bei der Entfernung von der Kammer (12) zu begrenzen, dadurch gekennzeichnet, daß der Umfang der Membran (20), der zwischen dem Körper (10) und der Überdruckplatte (14) angeordnet ist, an diesen durch Verschweißung, vorzugsweise durch Rändelschweißung, befestigt ist.

3. Druckaufnehmer nach einem der Ansprüche 1 und 2, dadurch gekennzeichnet, daß die Membran (20) aus dem Bereich der Spezialstähle Fe + Ni ausgewählt ist, während der Körper (10) des Aufnehmers und die Überdruckplatte (14) aus Edelstahl bestehen.

4. Druckaufnehmer nach einem der Ansprüche 1 bis 3, dadurch gekennzeichnet, daß das Kompensationsorgan (203) ein Material enthält, das einen Wärmeausdehnungskoeffizienten von mehr als $20 \times 10^{-6}/°C$ und vorzugsweise in der Größenordnung von $90 \times 10^{-6}/°C$ aufweist.

5. Drückaufnehmer nach einem der Ansprüche 1 bis 4, dadurch gekennzeichney, daß das Kompensationsorgan (203) Polyäthersulfon (PES) enthält.

6. Druckaufnehmer nach einem der Ansprüche 1 bis 5, dadurch gekennzeichnet, daß das Kompensationsorgan (203) in einer Büchse (201) geführt ist, die quer zur Membran (20) verschiebbar geführt ist.

7. Druckaufnehmer nach Anspruch 6, bei dem die bewegliche Einrichtung (100) schwenkbar an dem Körper (10) des Aufnehmers befestigt ist, dadurch gekennzeichnet, daß die Büchse (201) eine Auflageplatte (205) trägt, auf der die bewegliche Einrichtung (100) mittels einer kleinen Kugel (145) ruht.

8. Druckaufnehmer nach Anspruch 7, dadurch gekennzeichnet, daß die Auflageplatte (205) aus Rubin besteht.

9. Druckaufnehmer nach einem der Ansprüche 7 oder 8, dadurch gekennzeichnet, daß die kleine Kugel (145) aus Wolfram besteht.

10. Druckaufnehmer nach einem der Ansprüche 6 bis 9, dadurch gekennzeichnet, daß die Büchse (201) aus Stahl besteht.

FIG-1

FIG-2